# EUROPEAN PATENT APPLICATION

(11) **EP 2 314 530 A2**
(43) Date of publication of application: **27.04.2011**
(21) Application number: 10188175.3
(22) Date of filing: 20.10.2010
(51) Int. Cl.: B65G 57/10, B65G 57/112, B65G 57/18

(54) **Mobile device for stacking wooden logs onto a pallet with raised sides**

(30) Priority: 21.10.2009 SI 200900312
(71) Applicant: Winkl, Peter, 9143 St. Michael ob Bleiburg (AT)
(72) Inventor: Winkl, Peter, 9143 St. Michael ob Bleiburg (AT)
(74) Representative: Djukic, Dusan

(57) **Abstract**

This invention reveals a new mobile device for the stacking of logs onto a pallet with raised sides, which is built into the container frame and installed on a trailer. It comprises of a directing conveyor belt (4), which has paddles (5) and is inclined upwards, a belt for dividing logs (9), a trapdoor (10), a positioning conveyor belt (11), a longitudinal positioning slider (12), a transverse transporter of lines of logs (13), a transfer plate (14), which has raised sides (16) and is installed on a lifting device (15), a horizontal vibrating plate (19), a stable vibrating plate (17), a mobile vibrating plate (20) and a folding platform (21), as well as a chain transporter (22), a device for manoeuvring pallets with clasping modules (23) and a wrapping device (24), which wraps up a pallet (18) with a packing band and, thus, stabilizes it.

The invention also describes the process of stacking logs onto a pallet with raised sides by the device based on this invention.

## Description

### Field of invention

The invention refers to a mobile device for the automatic stacking of cut wooden logs onto a pallet with raised sides.

### Background of the invention and the current state of engineering

The preparation of firewood is a difficult and time-consuming errand, since it takes a lot of time to cut up the wood by hand and to transport tree trunks or parts of trunks to the place where they are turned into logs.

With various so-called wood cutting and splitting machines, it is possible to cut whole normal sized tree trunks into logs by using both a saw and a splitting device within the same work process. The tree trunk that we plan to cut is transported up a conveyor belt into a device, where each time a saw cuts off a part of it, which is usually 33 cm of length. Then, the splitting device splits this piece of wood into fire logs. The logs that come out of the splitting device are of different width, but of the same length. Apart from the invention of the same inventor described in the Austrian patent no. 505224, all known solutions so far end in logs, which have to be stacked onto a pallet by hand.

All currently known solutions for transporting pieced goods and the like are described in patents DE 39 06 089 A1, US 3 295 703 A and DE 1 191 296. These, however, cannot achieve axial alignment and are suitable only for long pieces of wood, such as boards or battens. Other known solutions are described in patents JP 59 124 629 A and US 2004/0221549 A1, but are intended for the transport of pieced goods, which are of the same size and have the same surface structure.

### Technical problem

Based on currently known technical solutions, different surface structures and different sizes of pieced goods make the automatic work process impossible.

The technical problem with which this invention deals is the automatic process of stacking logs onto pallets despite the different characteristics of individual logs.

This invention completely solves the described technical problem and, thus, differs greatly from all known solutions.

### Brief description of the invention

This invention reveals a new device for the automatic stacking of logs onto pallets with raised sides, which is mobile and enables the cutting process, palletisation and final packing of filled pallets on the spot.

In the following, this invention is described with the help of the enclosed figures, which represent:
- Figure 1: A schematic display of the device structure viewed from above
- Figure 2: A schematic display of a part of the device viewed from the side
- Figure 3: A schematic display of the device structure viewed from the side
- Figure 4: A schematic display of the device built into a container frame

### Detailed description of the invention

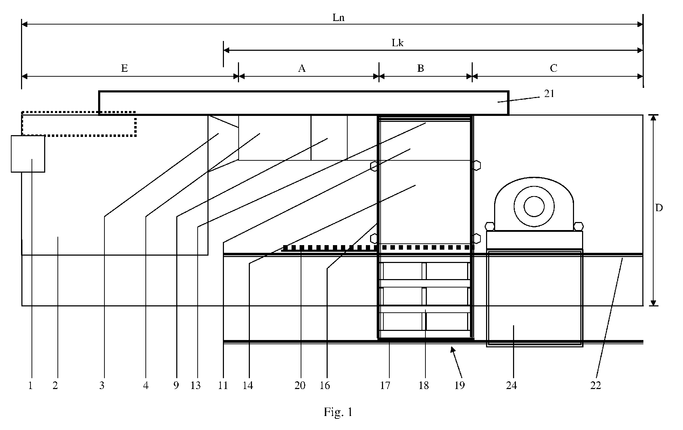

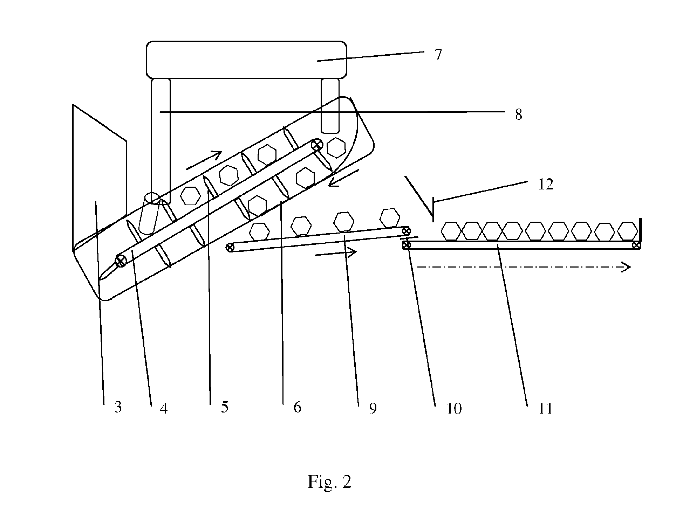

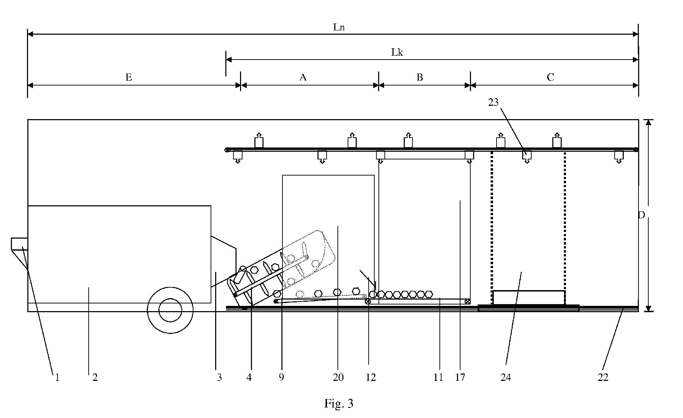

Figures 1 and 3 show the schematic presentation of the cutting and splitting device, which comprises of a conveyor belt 1, which conveys the trunks into a cutting and splitting machine 2, from where the sawn and split wood, or rather logs, of specific length fall into a transfer attachment 3, which transfers them onto a directing conveyor belt 4, which is inclined in a way, so that it enables logs to be transported up the conveyor belt at an angle of up to 35°, preferably up to 5°. The directing belt has transverse paddles 5, a bent sliding plate 6 on the bottom part of the conveyor 4, which transfers the logs to the point where they fall from the conveyor onto a conveyor belt for dividing logs 9, and raised sides (not shown). (figure 2).

As shown in figure 2, the directing conveyor belt 4 is connected to an eccentric vibrator 7, which with the help of swinging elements 8 shakes the conveyor 4 and, thus, aligns the logs on the paddles 5 of the conveyor 4. Meanwhile, the raised sides of the directing conveyor 4 prevent logs from falling off the conveyor 4 due to vibrations.

The logs, which fall onto the conveyor belt for dividing the logs 9 are conveyed up the positioning conveyor 11, which runs transversally above the transfer plate 14 and fills up piece by piece. The frequency of filling up is controlled by a trapdoor 10, which is situated between the belt for dividing logs 9 and the positioning conveyor 11.

When a line of stacked logs reaches a specific length, the device based on this invention slightly presses together the logs with the help of a longitudinal positioning slider 12, so that there is no space between the logs. Then, by a transverse transporter of the lines of logs 13 (figure 1), the line of logs is pushed onto the transfer plate 14 with raised sides 16 in a way that the line with regard to its width takes up only as much space on the plate as one log is long (33 cm).

The transverse transporter pushes three lines of logs side by side onto the transfer plate 14, so that the plate 14 is completely covered with a layer of logs. When completely full, plate 14 moves transversally through an open side of the pallet 18 onto pallet 18, which is being filled up, where the transverse transporter of the lines of logs holds the logs above the pallet so that the logs fall onto the pallet from a low height. After that, the transfer plate 14 and the transverse transporter return to their initial position.

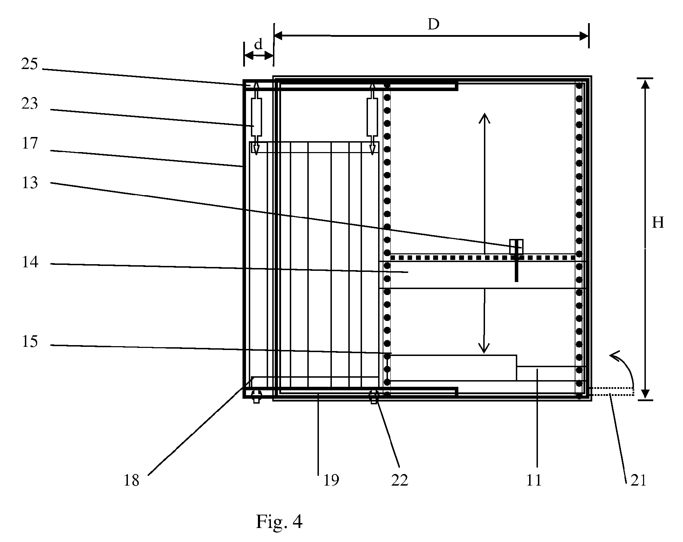

Each time the same pallet is filled up with the new line of logs, the plate 14, which is covered with logs, is lifted up by a suitable lifting device, such as a linear lifting device 15 (figure 4), to the appropriate height, which is measured by an ultrasonic measuring device (not shown), so that the new layer of logs is laid down on the previously laid layer of logs.

Under the pallet, there is a horizontal vibrating plate 19, which optimally compresses the logs on the pallet. On the open sides of the pallet, there is a stable protective vibrating plate 17 and a mobile vibrating plate 20, which block the open sides of the pallet and prevent the logs from falling off, while the pallet is being filled up or while the logs are being compressed.

The mobile vibrating plate 20 is installed in a way that it travels along a toothed rack from its initial position, where a side of a pallet is completely open, to its final position, where a side of the pallet is completely closed.

After the logs have been compressed, the upper empty space in the pallet can be filled up if necessary and the logs can be compressed one more time if necessary.

As shown in the figure 1, the filled pallet 18 is transported by a chain transporter 22 to the automatic wrapping device 24, which wraps up the pallet with a packing band and, thus, stabilizes it.

In figure 4, there is a container, or rather the frame of a container, with a built-in device based on this invention. The container frame in the described structure is 259 cm high H, 243 cm wide D, and has 520 cm of Lk length.

The entire set for the cutting, stacking and packing of logs onto a pallet also comprises of a device for cutting and splitting, the E length of which amounts to app. 280 cm, and the length of the entire set for the cutting, stacking and packing of logs onto a pallet amounts to app. 780 cm.

The pallets with raised sides can be manoeuvred by a device with clamping modules 23 beneath the top of the container frame and by the chain transporter 22, which is situated at the bottom of the container frame.

As shown in figures 1 and 4, the working width of the device is for d larger than the width of the container frame D, where d is app. 40 cm.

Before starting the process, the working width of the device, as well as the necessary working and manoeuvring space, can be achieved by pulling the whole pallet line app. 40 cm (distance d) out of the container frame along the whole length and height of the container frame (Figure 4).

Simultaneously, before starting the process, a folding platform 21, which gives you more space for maintaining and manoeuvring the device, should be opened out.

The container frame with the built-in device is installed on a suitable trailer, which enables the folded device to be transported to any place, where, together with the cutting and splitting device, the whole set for cutting, stacking and packing logs onto pallets can be set up.

As shown in figure 3, the device alone within the mentioned container frame is divided into three fields: the first field A, which comprises of a directing conveyor belt 4 and the positioning conveyor belt 11 and which, in the described example, is 180 cm long; the second field B, which comprises of a pallet, which is being filled up, the transverse transporter of the lines of logs 14 and the transfer place 14 and which, in the described example, is 110 cm long; and the third field C, where there is the automatic wrapping device 24 for the packing of pallets and which, in the described example, is 200 cm long.

In the example described, logs are 33 cm long, and the outer dimensions of the pallet which is being filled up are (width x length x height) 100 cm x 120 cm x 197.5 cm.

All the mobile parts of the described device are driven pneumatically and/or hydraulically and/or by appropriate electro motors, which are already used in the field of engineering and they alone are not considered as a part of this invention, and are, therefore, not described in details. The energy is provided by a diesel electric aggregate, which can be an independent device or a part of the vehicle, which transports the device, and also comprises of a device for compressing air or a compressor as well as a hydraulic aggregate.

This invention is described with the help of a practical example of the process. Various products based on this invention will be completely clear to the experts of this field and are comprised within this invention.

## Claims

1. The device for stacking logs onto a pallet with raised sides is built into a container frame, which is installed on a trailer and comprises of a directing conveyor belt (4), a conveyor for dividing logs (9), a trapdoor (10), a positioning conveyor belt (11), a longitudinal positioning slider (12), a transverse transporter of the lines of logs (13), a transfer plate (14), which has raised sides (16) and is installed on a lifting device (15), a horizontal vibrating plate (19), a stable vibrating plate (17), a mobile vibrating plate (20) and a folding platform (21).

2. The device based on the claim 1 comprises of a directing conveyor belt (4), which is inclined upwards at an angle of up to 35°, preferably up to 5°, consists of transverse paddles (5), a bent sliding plate (6) and raised sides, and is connected to an eccentric vibrator (7), which shakes it with the help of swinging elements (8).

3. The device based on any of the two previous claims further consists of a chain transporter (22), which is situated at the bottom of the container frame, and a device for manoeuvring the pallets with clasping modules (23), situated beneath the top of the container frame, and a wrapping device (24), which wraps up the pallet with a packing band and, thus, stabilizes it.

4. The device based on any previous claim, typically with its working width for d larger than the width of the container frame D.

5. The process of stacking logs onto a pallet with raised sides (18) with the help of the device according to any previous claim comprises of the following steps:
a) directing logs on a directing conveyor belt (4),
b) laying logs down on a belt for dividing logs (9),
c) setting up an individual line of logs on a positioning conveyer belt (11) with the help of a trapdoor (10),
d) compressing individual lines of logs by the longitudinal positioning slider (12),
e) pushing compressed lines of logs by a transverse transporter of lines of logs (13) on a transfer plate (14), which has raised sides (16), until the transfer plate (14) is completely covered with a layer of logs,
f) filling up a pallet (18) with individual layers of logs,
g) the return of the transfer plate (14) to its initial position and lifting it to the suitable height, and the repetition of the steps e, f and g, until the pallet (8) is filled to the top,
h) compressing logs with the help of a horizontal vibrating plate (19),
i) the unnecessary repetition of steps e, f and g,
j) the unnecessary repetition of step h,
k) transporting the pallet (18) by a chain transporter (22) to the wrapping device (24), and the packing of the pallet.
